# EUROPEAN PATENT APPLICATION

(11) **EP 4 424 601 A1**
(43) Date of publication of application: **04.09.2024**
(21) Application number: 22887112.5
(22) Date of filing: 27.10.2022
(51) Int. Cl.: B64D 37/30

(54) **HYDROGEN AIRCRAFT, PRE-COOLING EQUIPMENT, AND PRE-COOLING SYSTEM AND PRE-COOLING METHOD FOR FUEL SUPPLY LINE OF HYDROGEN AIRCRAFT**

(30) Priority: 27.10.2021 JP 2021175929
(71) Applicant: KAWASAKI JUKOGYO KABUSHIKI KAISHA, Kobe-shi, Hyogo 650-8670 (JP)
(72) Inventor: TAKAI, Masato, Kobe-shi, Hyogo 650-8670 (JP); OSHIMA, Ryosuke, Kobe-shi, Hyogo 650-8670 (JP)
(74) Representative: Dantz, Jan Henning
(86) International application number: PCT/JP2022/040123
(87) International publication number: WO 2023/074787

(57) **Abstract**

A the hydrogen aircraft includes: an engine that uses hydrogen as a fuel; a fuel tank that stores the fuel; and a fuel supply line to supply the fuel from the fuel tank to the engine. The fuel tank or the fuel supply line includes a cooling medium supply port. The fuel supply line includes a cooling medium recovery port that is located downstream of the cooling medium supply port in terms of a flow of the fuel. A precooling system for precooling the fuel supply line of the hydrogen aircraft includes: a cooling medium supply line to supply a cooling medium to the cooling medium supply port; and a cooling medium recovery line to recover the cooling medium from the cooling medium recovery port. The precooling system supplies the cooling medium from the cooling medium supply line to the fuel supply line through the cooling medium supply port and recovers the cooling medium that has been supplied to the fuel supply line by the cooling medium recovery line through the cooling medium recovery port to precool the fuel supply line.

## Description

### Technical Field

The present disclosure relates to a precooling system for and a precooling method of precooling a fuel supply line of a hydrogen aircraft.

### Background Art

In recent years, progress has been made on the development of hydrogen aircrafts. A hydrogen aircraft is an aircraft mounted with an engine whose fuel is partly or entirely hydrogen (see Patent Literature 1, for example).

A hydrogen aircraft is mounted with the following: a fuel tank that stores a hydrogen fuel; an engine for hydrogen combustion; and a fuel supply line to supply the fuel from the fuel tank to a combustor of the engine. The fuel supply line includes, for example, an engine pump that boosts the pressure of the fuel, a filter, a flow control valve, a heat exchanger, etc. The fuel stored in the fuel tank is, for example, liquid hydrogen. The liquid hydrogen in the fuel tank is supplied to the combustor of the engine through the fuel supply line laid within the aircraft.

### Citation List

### Patent Literature

PTL 1: U.S. Patent Application Publication No. 2015/0336680

### Summary of Invention

### Technical Problem

In the fuel supply line of the hydrogen aircraft, in a case where there is a temperature difference between the hydrogen fuel stored in the fuel tank and the fuel supply line (e.g., before the start of the engine of the hydrogen aircraft), the temperature of the hydrogen fuel flowing from the fuel tank into the fuel supply line may increase while passing through the fuel supply line, and as a result, the temperature of the hydrogen fuel may become unsuitable for use in the engine. It is desired that the temperature difference between the hydrogen fuel and the fuel supply line be small.

### Solution to Problem

In order to solve the above-described problems, a precooling system according to one aspect of the present disclosure is a precooling system for precooling a fuel supply line of a hydrogen aircraft, the hydrogen aircraft including: an engine that uses hydrogen as a fuel; a fuel tank that stores the fuel; and the fuel supply line to supply the fuel from the fuel tank to the engine, the fuel tank or the fuel supply line including a cooling medium supply port, the fuel supply line including a cooling medium recovery port that is located downstream of the cooling medium supply port in terms of a flow of the fuel. The precooling system includes: a cooling medium supply line to supply a cooling medium to the cooling medium supply port; and a cooling medium recovery line to recover the cooling medium from the cooling medium recovery port. The precooling system supplies the cooling medium from the cooling medium supply line to the fuel supply line through the cooling medium supply port and recovers the cooling medium that has been supplied to the fuel supply line by the cooling medium recovery line through the cooling medium recovery port to precool the fuel supply line.

A precooling method according to one aspect of the present disclosure is a precooling method of precooling a fuel supply line of a hydrogen aircraft, the hydrogen aircraft including: an engine that uses hydrogen as a fuel; a fuel tank that stores the fuel; and the fuel supply line to supply the fuel from the fuel tank to the engine. The precooling method includes: connecting a cooling medium supply line to a cooling medium supply port that is included in the fuel tank or in the fuel supply line; connecting a cooling medium recovery line to a cooling medium recovery port that is included in the fuel supply line and that is located downstream of the cooling medium supply port in terms of a flow of the fuel; and supplying a cooling medium from the cooling medium supply line to the fuel supply line through the cooling medium supply port and recovering the cooling medium that has been supplied to the fuel supply line by the cooling medium recovery line through the cooling medium recovery port to precool the fuel supply line.

A hydrogen aircraft according to one aspect of the present disclosure includes: an engine that uses hydrogen as a fuel; a fuel tank that stores the fuel; and a fuel supply line to supply the fuel from the fuel tank to the engine. The fuel tank or the fuel supply line includes a cooling medium supply port to which a cooling medium is supplied. The fuel supply line includes a cooling medium recovery port to recover the cooling medium, the cooling medium recovery port being located downstream of the cooling medium supply port in terms of a flow of the fuel. The fuel supply line is precooled by the cooling medium, which is supplied to the fuel supply line through the cooling medium supply port, flows through the fuel supply line, and is recovered from the fuel supply line through the cooling medium recovery port.

Precooling equipment according to one aspect of the present disclosure is precooling equipment for precooling a fuel supply line of a hydrogen aircraft, the hydrogen aircraft including: an engine that uses hydrogen as a fuel; a fuel tank that stores the fuel; and the fuel supply line to supply the fuel from the fuel tank to the engine, the fuel tank or the fuel supply line including a cooling medium supply port, the fuel supply line including a cooling medium recovery port that is located downstream of the cooling medium supply port. The precooling equipment includes: a cooling medium supply line connected to the cooling medium supply port; and a cooling medium recovery line connected to the cooling medium recovery port. The precooling equipment supplies a cooling medium from the cooling medium supply line to the fuel supply line through the cooling medium supply port and recovers the cooling medium that has been supplied to the fuel supply line by the cooling medium recovery line through the cooling medium recovery port to precool the fuel supply line.

### Advantageous Effects of Invention

According to one aspect of the present disclosure, the occurrence of a temperature difference between the hydrogen fuel and the fuel supply line can be suppressed, which makes it possible to stably supply the hydrogen fuel to the engine through the fuel supply line.

### Brief Description of Drawings

FIG. 1 is a system diagram showing a fuel supply line of a hydrogen aircraft and a precooling system for precooling the fuel supply line according to Embodiment 1 of the present disclosure.
FIG. 2 is a system diagram showing the fuel supply line of the hydrogen aircraft and the precooling system for precooling the fuel supply line according to Variation 1 of Embodiment 1 of the present disclosure.
FIG. 3 is a system diagram showing the fuel supply line of the hydrogen aircraft and the precooling system for precooling the fuel supply line according to Variation 2 of Embodiment 1 of the present disclosure.
FIG. 4 is a system diagram showing the fuel supply line of the hydrogen aircraft and a precooling system for precooling the fuel supply line according to Embodiment 2 of the present disclosure.

### Description of Embodiments

### [Embodiment 1]

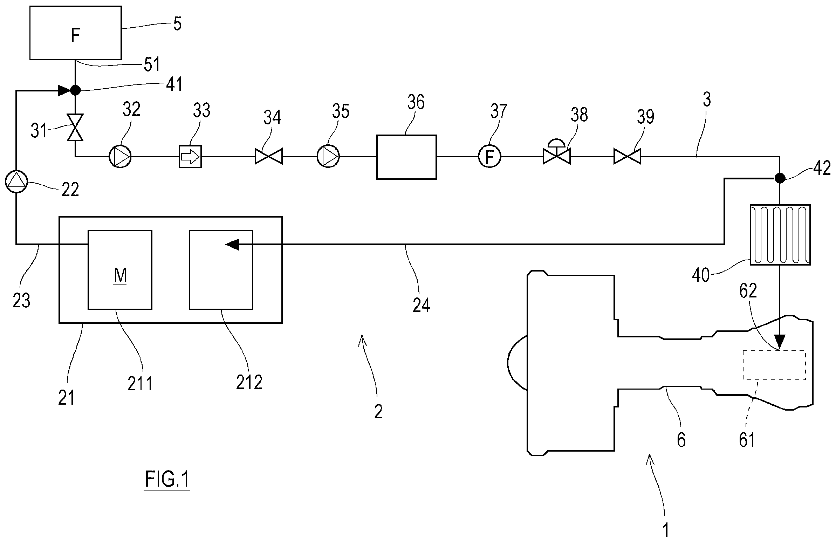

FIG. 1 a system diagram showing a precooling system 2 for precooling a fuel supply line 3 of a hydrogen aircraft 1 according to Embodiment 1 of the present disclosure. The precooling system 2 according to the present disclosure is used, for example, to precool the fuel supply line 3 before the start of an engine 6 of the hydrogen aircraft 1. The fuel supply line 3 connects between a fuel tank 5 and the engine 6.

### [Configuration Example of Hydrogen Aircraft 1]

The hydrogen aircraft 1 includes: the engine 6, which uses hydrogen as a fuel F; the fuel tank 5, which stores the fuel F; and the fuel supply line 3 to supply the fuel F from the fuel tank 5 to the engine 6. The fuel F stored in the fuel tank 5 is hydrogen in a liquid, gaseous, or supercritical state. The engine 6 includes a combustor 61, which combusts the hydrogen as the fuel F. The fuel F in the fuel tank 5 is supplied to the engine 6 through the fuel supply line 3.

The fuel supply line 3 forms a passage for the fuel F from an outlet 51 of the fuel tank 5 to an inlet 62 of the engine 6. The inlet 62 of the engine 6 is, for example, an inlet of a pipe that connects to the combustor 61 in the engine 6. On the fuel supply line 3, a first shut-off valve 31, a booster pump 32, a check valve 33, a second shut-off valve 34, an engine pump 35, a fuel filter 36, a flowmeter 37, a flow control valve 38, a third shut-off valve 39, and a heat exchanger 40 are sequentially located from the upstream side to the downstream side. The order of the arrangement of these elements on the fuel supply line 3 can be changed as necessary. These elements on the fuel supply line 3 are connected to one another by piping or the like. In the description herein, "upstream" and "downstream" are defined with reference to the flow direction of the fuel F. The engine pump 35 boosts the pressure of the fuel F to a predetermined pressure that is required for the fuel F in the engine 6. In a case where the fuel F passing through the third shut-off valve 39 is gaseous, the heat exchanger 40 may be eliminated from the fuel supply line 3.

The fuel supply line 3 includes a cooling medium supply port 41 and a cooling medium recovery port 42. The cooling medium recovery port 42 is located downstream of the cooling medium supply port 41. Preferably, the cooling medium supply port 41 is located upstream of the engine pump 35 on the fuel supply line 3, and the cooling medium recovery port 42 is located downstream of the engine pump 35 on the fuel supply line 3. More preferably, the cooling medium supply port 41 is located further upstream on the fuel supply line 3. In the present embodiment, the cooling medium supply port 41 is located between the outlet 51 of the fuel tank 5 and the first shut-off valve 31 on the fuel supply line 3.

Preferably, the cooling medium recovery port 42 is located further downstream on the fuel supply line 3. In a case where the fuel supply line 3 includes the heat exchanger 40, the cooling medium recovery port 42 is located upstream of the heat exchanger 40. In the present embodiment, the cooling medium recovery port 42 is located between the third shut-off valve 39 and the heat exchanger 40 on the fuel supply line 3.

### [Configuration Example of Precooling System 2]

The precooling system 2 includes a cooling medium pump 22, a cooling medium supply line 23, and a cooling medium recovery line 24.

Precooling equipment 21 is mounted with the cooling medium pump 22, the cooling medium supply line 23, and the cooling medium recovery line 24. The precooling equipment 21 is equipment to supply a cooling medium to the cooling medium supply line 23. The precooling equipment 21 may be, for example, fixed on the ground or fixed underground, or may be mobile. Devices forming the precooling equipment 21 may be located such that they are spaced apart from each other. The engine pump 35 of the hydrogen aircraft 1 may double as the cooling medium pump 22.

The precooling equipment 21 includes a cooling medium supply source 211. The cooling medium supply source 211 supplies a cooling medium M to the cooling medium supply line 23. The cooling medium supply source 211 may be a container containing the cooling medium M, or may be a pipe or the like to introduce the cooling medium M from the outside. The cooling medium M may be, for example, hydrogen in a liquid, gaseous, or supercritical state. The cooling medium M may be in a state different from the state of the fuel F stored in the fuel tank 5. The cooling medium M may be a different substance from the fuel F. In light of further reducing the temperature difference between the fuel supply line 3 and the fuel F stored in the fuel tank 5, the cooling medium M and the fuel F are preferably the same substance.

The precooling equipment 21 includes a cooling medium processor 212. The cooling medium M is fed from the cooling medium recovery line 24 to the cooling medium processor 212. The cooling medium processor 212 processes the cooling medium M that has returned to the precooling equipment 21 through the cooling medium recovery line 24 after flowing through the fuel supply line 3. There is a case where the cooling medium M has increased in temperature and has expanded after flowing through the fuel supply line 3. For example, the cooling medium processor 212 cools the cooling medium M that has returned from the cooling medium recovery line 24, and brings the cooled cooling medium M back to the cooling medium supply source 211. The cooling medium processor 212 may store or discard the cooling medium M that has returned from the cooling medium recovery line 24, or may process the returned cooling medium M to use it in a use application that is different from the cooling of the fuel supply line 3.

The cooling medium supply source 211 of the precooling equipment 21 and the cooling medium supply port 41 are connected by the cooling medium supply line 23. The cooling medium supply line 23 is attachable to and detachable from the cooling medium supply port 41. The cooling medium recovery port 42 and the cooling medium processor 212 of the precooling equipment 21 are connected by the cooling medium recovery line 24. The cooling medium recovery line 24 is attachable to and detachable from the cooling medium recovery port 42. In the present embodiment, the cooling medium pump 22 is a pump located on the cooling medium supply line 23 or on the cooling medium recovery line 24. The engine pump 35 on the fuel supply line 3 may double as the cooling medium pump 22. Alternatively, both the engine pump 35 on the fuel supply line 3 and a pump located on the cooling medium supply line 23 or on the cooling medium recovery line 24 may be used as the cooling medium pump 22.

For example, before the start of the engine 6 of the hydrogen aircraft 1, the precooling system 2 precools the fuel supply line 3, which connects between the fuel tank 5 and the engine 6, and thereby the occurrence of a temperature difference between the hydrogen fuel and the fuel supply line 3 can be suppressed, which makes it possible to stably supply the hydrogen fuel to the engine 6 through the fuel supply line 3. Moreover, since the cooling medium M that has passed through the fuel supply line 3 is neither directly returned to the fuel tank 5 nor fed to the engine 6, but recovered by the cooling medium recovery line 24, the cooling medium M whose temperature has increased can be prevented from flowing into the fuel tank 5 or the engine 6.

Furthermore, since the precooling system 2 is attachable to and detachable from the hydrogen aircraft 1, the precooling system 2 can be connected to the fuel supply line 3 when precooling the fuel supply line 3. Thus, devices to perform the precooling of the fuel supply line 3 can be eliminated from the hydrogen aircraft 1, and thereby the weight of the hydrogen aircraft 1 can be reduced.

[Precooling Method of Precooling Fuel Supply Line 3]

Hereinafter, a precooling method of precooling the fuel supply line 3 of the hydrogen aircraft 1 by using the precooling system 2 of Embodiment 1 is described. The precooling of the fuel supply line 3 is performed, for example, before the start of the engine 6. The precooling method of precooling the fuel supply line 3 includes the following steps.
(i) Connecting the cooling medium supply line 23 to the cooling medium supply port 41 and connecting the cooling medium recovery line 24 to the cooling medium recovery port 42. At the time, preferably, connecting the cooling medium supply line 23 to the cooling medium supply port 41 is performed after connecting the cooling medium recovery line 24 to the cooling medium recovery port 42.
(ii) Starting the cooling medium pump 22. At the time, the outlet 51 of the fuel tank 5 and the inlet of the heat exchanger 40 are in a closed state, whereas the first shut-off valve 31, the second shut-off valve 34, and the third shut-off valve 39 are in an opened state.
(iii) Stopping the cooling medium pump 22 in a case where the temperature of the fuel supply line 3 has become a predetermined temperature or in a case where a predetermined precooling time has elapsed.
(iv) Disconnecting the cooling medium supply port 41 and the cooling medium supply line 23 from each other, and disconnecting the cooling medium recovery port 42 and the cooling medium recovery line 24 from each other. At the time, the first shut-off valve 31, the second shut-off valve 34, and the third shut-off valve 39 are in a closed state.

In the above step (ii), as a result of the cooling medium pump 22 starting operating, the cooling medium M from the cooling medium supply source 211 of the precooling equipment 21 flows through the cooling medium supply line 23, the fuel supply line 3, and the cooling medium recovery line 24 sequentially, and returns to the cooling medium processor 212 of the precooling equipment 21. As a result of the cooling medium M flowing through the fuel supply line 3, the fuel supply line 3 is precooled.

After the fuel supply line 3 is precooled, the engine pump 35 is started. At the time, the inlet of the heat exchanger 40, the first shut-off valve 31, the second shut-off valve 34, and the third shut-off valve 39 are in an opened state. As a result, the fuel F in the fuel tank 5 is supplied to the engine 6 through the fuel supply line 3. In this manner, the fuel supply line 3 is precooled by the precooling system 2, and thereby an increase in the temperature of the fuel F in the fuel supply line 3 can be suppressed at the start of the engine 6 of the hydrogen aircraft 1. Consequently, in the hydrogen aircraft 1, from the start of the engine 6, the fuel F at a suitable temperature for use in the engine 6 can be stably supplied from the fuel tank 5 to the engine 6 through the fuel supply line 3.

In the hydrogen aircraft 1 shown in FIG. 1, the fuel supply line 3 includes the cooling medium supply port 41, and the cooling medium M does not pass through the fuel tank 5. Thus, the interior of the fuel tank 5 is excluded from the passage for the cooling medium M. Therefore, the fuel F and the cooling medium M will not be mixed together in the fuel tank 5. This makes it possible to precool the fuel supply line 3 while keeping the temperature of the fuel F in the fuel tank 5 low. In terms of a flow of the fuel F, the interior of the fuel tank 5 can be regarded as being located upstream of the engine pump 35 on the fuel supply line 3. Accordingly, the fuel tank 5 may be used as a part of the passage for the cooling medium M.

### [Variation 1]

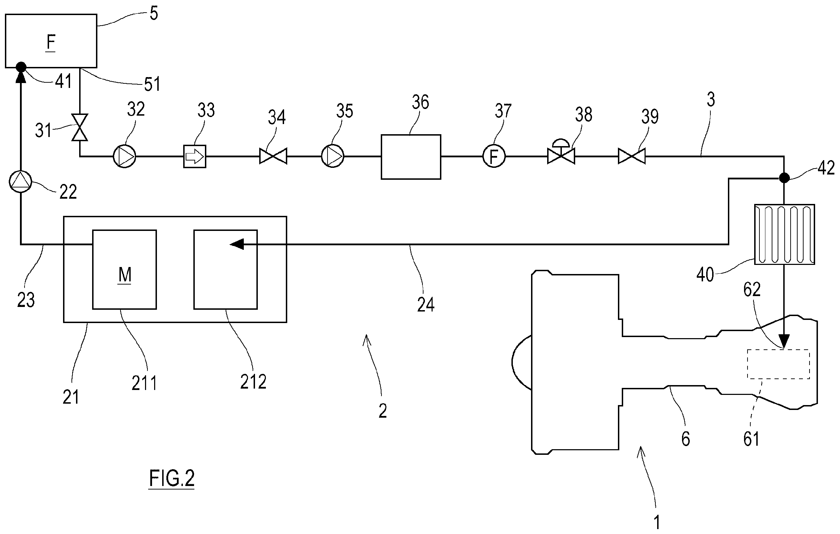

FIG. 2 is a system diagram showing the fuel supply line 3 of the hydrogen aircraft 1 according to Variation 1 of Embodiment 1 and the precooling system 2 thereof. In Variation 1 shown in FIG. 2, the fuel tank 5 includes the cooling medium supply port 41. The cooling medium supply port 41 may double as a fuel inlet of the fuel tank 5. In the description of Variations 1 and 2, substantially the same components as those previously described in Embodiment 1 are denoted in the drawings by the same reference signs as those used in Embodiment 1, and the description of such components is omitted.

In Variation 1 shown in FIG. 2, at the time of precooling the fuel supply line 3, the cooling medium pump 22 is started with the outlet 51 of the fuel tank 5 being in an opened state, the inlet of the heat exchanger 40 being in a closed state, and the first shut-off valve 31, the second shut-off valve 34, and the third shut-off valve 39 being in an opened state. As a result, the cooling medium M from the cooling medium supply source 211 flows through the cooling medium supply line 23, the interior of the fuel tank 5, the fuel supply line 3, and the cooling medium recovery line 24 sequentially, and is then recovered into the cooling medium processor 212.

### [Variation 2]

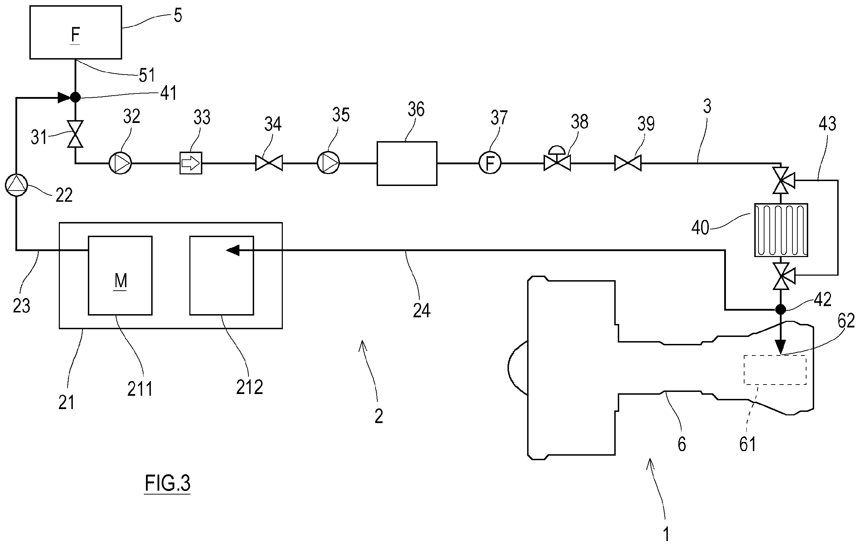

FIG. 3 is a system diagram showing the fuel supply line 3 of the hydrogen aircraft 1 according to Variation 2 of Embodiment 1 and the precooling system 2 thereof. In Variation 2 shown in FIG. 3, the cooling medium recovery port 42 is located downstream of the heat exchanger 40 on the fuel supply line 3.

In Variation 2 shown in FIG. 3, a bypass line 43, which extends in a manner to bypass the heat exchanger 40, is connected to the fuel supply line 3. Through the bypass line 43, the cooling medium M flows from the upstream side to the downstream side of the heat exchanger 40. While the engine 6 is operating, the fuel F is allowed to pass through the bypass line 43. On the fuel supply line 3, the cooling medium recovery port 42 is located downstream of the bypass line 43.

In Variation 2, at the time of precooling the fuel supply line 3, the passage of the fuel supply line 3 is switched so that the cooling medium M will pass through not the heat exchanger 40 but the bypass line 43, and the cooling medium pump 22 is started with the first shut-off valve 31, the second shut-off valve 34, and the third shut-off valve 39 being in an opened state. As a result, the cooling medium M from the cooling medium supply source 211 flows through the cooling medium supply line 23, the fuel tank 5, the fuel supply line 3, and the cooling medium recovery line 24 sequentially, and is then recovered into the cooling medium processor 212. The cooling medium M flowing in the fuel supply line 3 does not flow through the heat exchanger 40, but flows through the bypass line 43. Thus, in a case where the fuel supply line 3 includes devices that do not require precooling, such as the heat exchanger 40, the passage that bypasses the devices that do not require precooling may be installed, and the cooling medium M may be flowed through the bypass passage. This makes it possible to perform precooling on parts of the fuel supply line 3, the parts requiring the precooling.

### [Embodiment 2]

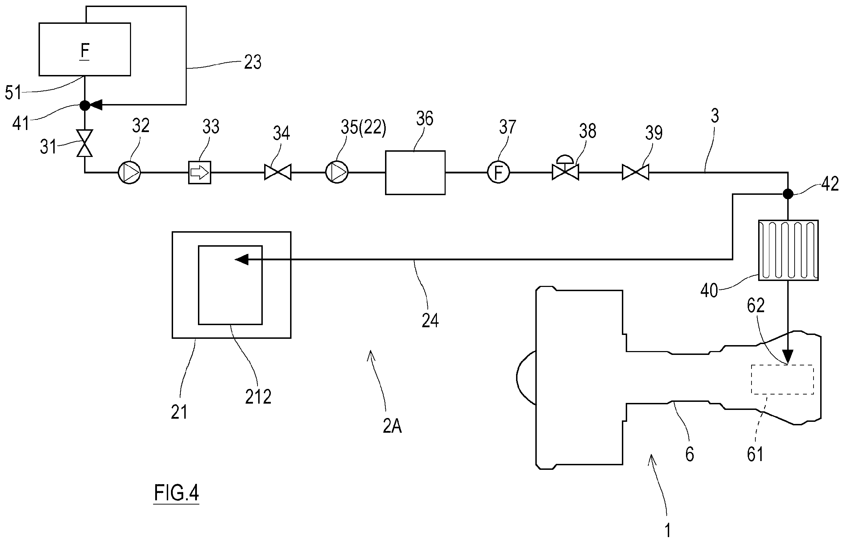

FIG. 4 is a system diagram showing the fuel supply line 3 of the hydrogen aircraft 1 according to Embodiment 2 and a precooling system 2A thereof. In the description of the present embodiment, substantially the same components as those previously described in Embodiment 1 are denoted in the drawing by the same reference signs as those used in Embodiment 1, and the description of such components is omitted.

The fuel tank 5 of the hydrogen aircraft 1 shown in FIG. 4 stores liquid hydrogen as the fuel F. In the upper part of the fuel tank 5, gaseous hydrogen generated by vaporization of the liquid hydrogen (the generated gaseous hydrogen may be called boil off gas) is accumulated. The cooling medium supply line 23 is connected to the fuel tank 5. Through the cooling medium supply line 23, the gaseous hydrogen generated by vaporization of the fuel F is discharged from the fuel tank 5 to the fuel supply line 3. The fuel tank 5 is connected to the cooling medium recovery port 42 through the cooling medium supply line 23. A boil off gas line may be connected to the fuel tank 5, and the boil off gas line and the cooling medium supply line 23 may be connected to each other. In this case, the fuel tank 5 may be connected to the cooling medium recovery port 42 through the boil off gas line and the cooling medium supply line 23. In the precooling system 2A according to Embodiment 2, the gaseous hydrogen generated by vaporization of the fuel F in the fuel tank 5 is used as the cooling medium M.

The precooling system 2A includes the cooling medium pump 22, the cooling medium supply line 23, and the cooling medium recovery line 24. The engine pump 35 may double as the cooling medium pump 22, or the precooling equipment 21 may be mounted with the cooling medium pump 22. The cooling medium pump 22 may be eliminated. The hydrogen aircraft 1 may be mounted with the cooling medium supply line 23, or the precooling equipment 21 may be mounted with the cooling medium supply line 23. The precooling equipment 21 is mounted with the cooling medium recovery line 24. The cooling medium recovery port 42 is located downstream of the engine pump 35 on the fuel supply line 3.

To start the precooling of the fuel supply line 3, the cooling medium supply line 23 and the cooling medium supply port 41 are connected to each other. In a case where the hydrogen aircraft 1 is mounted with the cooling medium supply line 23, the cooling medium supply line 23 may be connected to the cooling medium supply port 41 in advance, and a valve or the like may be operated to bring the cooling medium supply line 23 and the cooling medium supply port 41 into communication with each other. Then, during the precooling of the fuel supply line 3, the outlet 51 of the fuel tank 5 and the inlet of the heat exchanger 40 are in a closed state, whereas the first shut-off valve 31, the second shut-off valve 34, and the third shut-off valve 39 are in an opened state. The cooling medium pump 22 causes the gaseous hydrogen generated within the fuel tank 5 to flow, as the cooling medium M, through the cooling medium supply line 23, the cooling medium supply port 41, the fuel supply line 3, the cooling medium recovery port 42, and the cooling medium recovery line 24 sequentially, and then the cooling medium M is recovered into the cooling medium processor 212. In this manner, the gaseous hydrogen generated by vaporization of the fuel F flows through the fuel supply line 3 as the cooling medium M. This makes it possible to precool the fuel supply line 3 while keeping the temperature of the fuel F in the fuel tank 5 low.

The precooling system 2A for precooling the fuel supply line 3 of the hydrogen aircraft 1 according to Embodiment 2, and the precooling system 2 for precooling the fuel supply line 3 of the hydrogen aircraft 1 according to Embodiment 1, can be applied at the same time. Specifically, the boil off gas of the fuel F stored in the fuel tank 5 may be supplied to the fuel supply line 3 as the cooling medium M, and also, the cooling medium M stored in the cooling medium supply source 211 may be supplied to the fuel supply line 3. Each cooling medium M that has flowed through the fuel supply line 3 may be recovered into the cooling medium processor 212 through the cooling medium recovery line 24. Thus, in accordance with, for example, the condition of the fuel supply line 3, the condition of the fuel F stored in the fuel tank 5, and the condition of the precooling equipment 21, one of or both the precooling systems 2 and 2A can be used to precool the fuel supply line 3.

### [Summary]

The precooling system 2, 2A according to a first item of the present disclosure is the precooling system 2 for precooling the fuel supply line 3 of the hydrogen aircraft 1, the hydrogen aircraft 1 including: the engine 6, which uses hydrogen as the fuel F; the fuel tank 5, which stores the fuel F; and the fuel supply line 3 to supply the fuel F from the fuel tank 5 to the engine 6. The fuel tank 5 or the fuel supply line 3 includes the cooling medium supply port 41. The fuel supply line 3 includes the cooling medium recovery port 42, which is located downstream of the cooling medium supply port 41 in terms of a flow of the fuel F. The precooling system 2 includes: the cooling medium supply line 23 to supply the cooling medium M to the cooling medium supply port 41; and the cooling medium recovery line 24 to recover the cooling medium M from the cooling medium recovery port 42. The precooling system 2 supplies the cooling medium M from the cooling medium supply line 23 to the fuel supply line 3 through the cooling medium supply port 41 and recovers the cooling medium M that has been supplied to the fuel supply line 3 by the cooling medium recovery line 24 through the cooling medium recovery port 42 to precool the fuel supply line 3.

According to the above-described precooling system 2, for example, before the start of the engine 6 of the hydrogen aircraft 1, the fuel supply line 3 to feed to the fuel F to the engine 6 is precooled by the cooling medium M, and thereby the occurrence of a temperature difference between the fuel F and the fuel supply line 3 can be suppressed, which makes it possible to stably supply the hydrogen fuel F to the engine 6 through the fuel supply line 3. Moreover, since the cooling medium M that has passed through the fuel supply line 3 is neither directly returned to the fuel tank 5 nor fed to the engine 6, but recovered by the cooling medium recovery line 24, the cooling medium M whose temperature has increased can be prevented from flowing into the fuel tank 5 or the engine 6.

The precooling system 2, 2A for precooling the fuel supply line 3 of the hydrogen aircraft 1 according to a second item of the present disclosure is configured such that the precooling system 2 according to the first item further includes the cooling medium pump 22 to supply the cooling medium M.

As a result of the cooling medium M being supplied by the cooling medium pump 22, the fuel supply line 3 can be cooled quickly.

The precooling system 2, 2A for precooling the fuel supply line 3 of the hydrogen aircraft 1 according to a third item of the present disclosure is configured such that the precooling system 2 according to the first or second item further includes the precooling equipment 21, which is mounted with the cooling medium supply line 23 and the cooling medium recovery line 24. The cooling medium supply line 23 and the cooling medium recovery line 24 are attachable to and detachable from the fuel supply line 3.

The cooling medium supply line 23 and the cooling medium recovery line 24 can be eliminated from the hydrogen aircraft 1, and thereby the weight of the hydrogen aircraft 1 can be reduced.

The precooling system 2, 2A for precooling the fuel supply line 3 of the hydrogen aircraft 1 according to a fourth item of the present disclosure is configured such that the precooling system 2 according to any one of the first to third items further includes the precooling equipment 21, which includes: the cooling medium supply source 211, which supplies the cooling medium M to the cooling medium supply line 23; and the cooling medium processor 212, which cools, stores, or discards the cooling medium M that has been recovered by the cooling medium recovery line 24.

The cooling medium supply source 211 and the cooling medium processor 212 can be eliminated from the hydrogen aircraft 1, and thereby the weight of the hydrogen aircraft 1 can be reduced.

The precooling system 2, 2A for precooling the fuel supply line 3 of the hydrogen aircraft 1 according to a fifth item of the present disclosure is configured such that, in the precooling system 2 according to any one of the first to fourth items, the fuel F stored in the fuel tank 5 is liquid hydrogen; the cooling medium M is gaseous hydrogen generated by vaporization of the liquid hydrogen; the cooling medium supply port 41 is included in the fuel supply line 3; and the fuel tank 5 is connected to the cooling medium supply line 23, and the gaseous hydrogen is supplied to the fuel supply line 3 through the cooling medium supply port 41.

The gaseous hydrogen generated by vaporization of the fuel F in the fuel tank 5 flows through the fuel supply line 3 as the cooling medium M. This makes it possible to efficiently use the gaseous hydrogen generated from the fuel F in the fuel tank 5. Moreover, the cooling medium M does not pass through the fuel tank 5. This makes it possible to precool the fuel supply line 3 while keeping the temperature of the fuel F in the fuel tank 5 low.

The precooling system 2 for precooling the fuel supply line 3 of the hydrogen aircraft 1 according to a sixth item of the present disclosure is configured such that, in the precooling system 2 according to any one of the first to fourth items, the cooling medium M is hydrogen in a liquid, gaseous, or supercritical state.

The same substance as the fuel F is used as the cooling medium M. This makes it possible to further reduce the temperature difference between the fuel supply line 3 and the fuel F stored in the fuel tank 5, and also makes it possible to reduce contamination of the fuel supply line 3.

A precooling method according to a seventh item of the present disclosure is a precooling method of precooling the fuel supply line 3 of the hydrogen aircraft 1, the hydrogen aircraft 1 including: the engine 6, which uses hydrogen as the fuel F; the fuel tank 5, which stores the fuel F; and the fuel supply line 3 to supply the fuel F from the fuel tank 5 to the engine 6. The precooling method includes: connecting the cooling medium supply line 23 to the cooling medium supply port 41, which is included in the fuel tank 5 or in the fuel supply line 3; connecting the cooling medium recovery line 24 to the cooling medium recovery port 42, which is included in the fuel supply line 3 and which is located downstream of the cooling medium supply port 41 in terms of a flow of the fuel F; and supplying the cooling medium M from the cooling medium supply line 23 to the fuel supply line 3 through the cooling medium supply port 41 and recovering the cooling medium M by the cooling medium recovery line 24 through the cooling medium recovery port 42 to precool the fuel supply line 3.

According to the above-described precooling method, for example, before the start of the engine 6 of the hydrogen aircraft 1, the fuel supply line 3 to feed the fuel F to the engine 6 is precooled by the cooling medium M, and thereby the occurrence of a temperature difference between the fuel F and the fuel supply line 3 can be suppressed, which makes it possible to stably supply the hydrogen fuel F to the engine 6 through the fuel supply line 3. Moreover, since the cooling medium M that has passed through the fuel supply line 3 is neither directly returned to the fuel tank 5 nor fed to the engine 6, but recovered by the cooling medium recovery line 24, the cooling medium M whose temperature has increased can be prevented from flowing into the fuel tank 5 or the engine 6.

The precooling method of precooling the fuel supply line 3 of the hydrogen aircraft 1 according to an eighth item of the present disclosure is configured such that, in the precooling method according to the seventh item, connecting the cooling medium supply line 23 to the cooling medium supply port 41 is performed after connecting the cooling medium recovery line 24 to the cooling medium recovery port 42.

After securing a cooling medium recovery path by connecting the cooling medium recovery line 24 to the cooling medium recovery port 42, connecting the cooling medium supply line 23 to the cooling medium supply port 41 is performed, which makes it possible to safety precool the fuel supply line 3.

The precooling method of precooling the fuel supply line 3 of the hydrogen aircraft 1 according to a ninth item of the present disclosure is configured such that, in the precooling method according to the seventh or eighth item, the fuel F stored in the fuel tank 5 is liquid hydrogen; the cooling medium M is gaseous hydrogen generated by vaporization of the liquid hydrogen; the cooling medium supply port 41 is included in the fuel supply line 3; the fuel tank 5 is connected to the cooling medium supply line 23; and the precooling method according to the seventh or eighth item further includes supplying the gaseous hydrogen to the fuel supply line 3 through the cooling medium supply port 41.

The gaseous hydrogen generated by vaporization of the fuel F in the fuel tank 5 flows through the fuel supply line 3 as the cooling medium M. This makes it possible to efficiently use the gaseous hydrogen generated from the fuel F in the fuel tank 5. The cooling medium M does not pass through the fuel tank 5. This makes it possible to precool the fuel supply line 3 while keeping the temperature of the fuel F in the fuel tank 5 low.

The precooling method of precooling the fuel supply line 3 of the hydrogen aircraft 1 according to a tenth item of the present disclosure is configured such that, in the precooling method according to the seventh or eighth item, the cooling medium M is hydrogen in a liquid, gaseous, or supercritical state.

The same substance as the fuel F is used as the cooling medium M. This makes it possible to further reduce the temperature difference between the fuel supply line 3 and the fuel F stored in the fuel tank 5, and also makes it possible to reduce contamination of the fuel supply line 3.

The hydrogen aircraft 1 according to an eleventh item of the present disclosure includes: the engine 6, which uses hydrogen as the fuel F; the fuel tank 5, which stores the fuel F; the fuel supply line 3 to supply the fuel F from the fuel tank 5 to the engine 6. The fuel tank 5 or the fuel supply line 3 includes the cooling medium supply port 41 to which the cooling medium M is supplied. The fuel supply line 3 includes the cooling medium recovery port 42 to recover the cooling medium M, the cooling medium recovery port 42 being located downstream of the cooling medium supply port 41 in terms of a flow of the fuel F. The fuel supply line 3 is precooled by the cooling medium M, which is supplied to the fuel supply line 3 through the cooling medium supply port 41, flows through the fuel supply line 3, and is recovered from the fuel supply line 3 through the cooling medium recovery port 42.

According to the above-described hydrogen aircraft 1, for example, before the start of the engine 6 of the hydrogen aircraft 1, the fuel supply line 3 to feed the fuel F to the engine 6 is precooled by the cooling medium M, and thereby the occurrence of a temperature difference between the fuel F and the fuel supply line 3 can be suppressed, which makes it possible to stably supply the hydrogen fuel F to the engine 6 through the fuel supply line 3. Moreover, since the cooling medium M that has passed through the fuel supply line 3 is neither directly returned to the fuel tank 5 nor fed to the engine 6, but recovered by the cooling medium recovery line 24, the cooling medium M whose temperature has increased can be prevented from flowing into the fuel tank 5 or the engine 6.

The hydrogen aircraft 1 according to a twelfth item of the present disclosure is configured such that, in the hydrogen aircraft 1 according to the eleventh item, the fuel supply line 3 includes the engine pump 35, which boosts the pressure of the fuel F; the cooling medium supply port 41 is located upstream of the engine pump 35; and the cooling medium recovery port 42 is located downstream of the engine pump 35.

In the above-described hydrogen aircraft 1, the fuel supply line 3 is precooled. Accordingly, for example, at the start of the engine 6, an increase in the temperature of the fuel F that has flowed into the fuel supply line 3 is suppressed, and the pressure of the fuel F is stably boosted to a predetermined pressure by the engine pump 35. Therefore, for example, at the start of the engine 6 of the hydrogen aircraft 1, the hydrogen fuel F can be stably supplied to the engine 6 through the fuel supply line 3.

The hydrogen aircraft 1 according to a thirteenth item of the present disclosure is configured such that, in the hydrogen aircraft 1 according to the eleventh or twelfth item, the fuel supply line 3 includes the heat exchanger 40, which vaporizes the fuel F; and the cooling medium recovery port 42 is located upstream of the heat exchanger 40 on the fuel supply line 3.

Among the elements of the fuel supply line 3, there are elements that do not require precooling. The fuel supply line 3 can be precooled in such a manner that the cooling medium M is not flowed to the elements that do not require precooling, thereby avoiding cooling them.

The precooling equipment 21 according to a fourteenth item of the present disclosure is the precooling equipment 21 for precooling the fuel supply line 3 of the hydrogen aircraft 1. The hydrogen aircraft 1 includes: the engine 6, which uses hydrogen as the fuel F; the fuel tank 5, which stores the fuel F; and the fuel supply line 3 to supply the fuel F from the fuel tank 5 to the engine 6. The fuel tank 5 or the fuel supply line 3 includes the cooling medium supply port 41. The fuel supply line 3 includes the cooling medium recovery port 42, which is located downstream of the cooling medium supply port 41. The precooling equipment 21 includes: the cooling medium supply line 23 connected to the cooling medium supply port 41; and the cooling medium recovery line 24 connected to the cooling medium recovery port 42. The precooling equipment 21 supplies the cooling medium M from the cooling medium supply line 23 to the fuel supply line 3 through the cooling medium supply port 41 and recovers the cooling medium M by the cooling medium recovery line 24 through the cooling medium recovery port 42 to precool the fuel supply line 3.

The precooling equipment 21 according to a fifteenth item of the present disclosure is configured such that the precooling equipment 21 according to the fourteenth item further includes: the cooling medium supply source 211, which supplies the cooling medium M to the cooling medium supply line 23; and the cooling medium processor 212, which cools, stores, or discards the cooling medium M that has been recovered by the cooling medium recovery line 24.

According to the above-described precooling equipment 21 according to the fourteenth or fifteenth item, for example, before the start of the engine 6 of the hydrogen aircraft 1, the fuel supply line 3 to feed to the fuel F to the engine 6 is precooled by the cooling medium M, and thereby the occurrence of a temperature difference between the fuel F and the fuel supply line 3 can be suppressed, which makes it possible to stably supply the hydrogen fuel F to the engine 6 through the fuel supply line 3. Moreover, since the cooling medium M that has passed through the fuel supply line 3 is neither directly returned to the fuel tank 5 nor fed to the engine 6, but recovered by the cooling medium recovery line 24, the cooling medium M whose temperature has increased can be prevented from flowing into the fuel tank 5 or the engine 6. Furthermore, since the precooling equipment 21 is configured independently of the hydrogen aircraft 1, devices necessary to perform the precooling of the fuel supply line 3 can be eliminated from the hydrogen aircraft 1, and thereby the weight of the hydrogen aircraft 1 can be reduced.

The present disclosure is presented for the purpose of giving examples and explanations, and there is no intention to limit the present disclosure to the modes disclosed herein. For example, in the above detailed description, various features of the present disclosure are grouped together in two embodiments for the purpose of streamlining the present disclosure. However, some of the features therein may be combined. Further, the features included in the present disclosure may be combined with alternative embodiments, alternative configurations, or alternatively modes, other than those described above.

## Claims

1. A precooling system for precooling a fuel supply line of a hydrogen aircraft, the hydrogen aircraft including: an engine that uses hydrogen as a fuel; a fuel tank that stores the fuel; and the fuel supply line to supply the fuel from the fuel tank to the engine, the fuel tank or the fuel supply line including a cooling medium supply port, the fuel supply line including a cooling medium recovery port that is located downstream of the cooling medium supply port in terms of a flow of the fuel,
the precooling system comprising:
a cooling medium supply line to supply a cooling medium to the cooling medium supply port; and
a cooling medium recovery line to recover the cooling medium from the cooling medium recovery port, wherein
the precooling system supplies the cooling medium from the cooling medium supply line to the fuel supply line through the cooling medium supply port and recovers the cooling medium that has been supplied to the fuel supply line by the cooling medium recovery line through the cooling medium recovery port to precool the fuel supply line.

2. The precooling system for precooling a fuel supply line of a hydrogen aircraft, according to claim 1, further comprising a cooling medium pump to supply the cooling medium.

3. The precooling system for precooling a fuel supply line of a hydrogen aircraft, according to claim 1 or 2, further comprising precooling equipment that is mounted with the cooling medium supply line and the cooling medium recovery line, wherein
the cooling medium supply line and the cooling medium recovery line are attachable to and detachable from the fuel supply line.

4. The precooling system for precooling a fuel supply line of a hydrogen aircraft, according to claim 1 or 2, further comprising precooling equipment that includes:
a cooling medium supply source that supplies the cooling medium to the cooling medium supply line; and
a cooling medium processor that cools, stores, or discards the cooling medium that has been recovered by the cooling medium recovery line.

5. The precooling system for precooling a fuel supply line of a hydrogen aircraft, according to claim 1 or 2, wherein:
the fuel stored in the fuel tank is liquid hydrogen;
the cooling medium is gaseous hydrogen generated by vaporization of the liquid hydrogen;
the cooling medium supply port is included in the fuel supply line; and
the fuel tank is connected to the cooling medium supply line, and the gaseous hydrogen is supplied to the fuel supply line through the cooling medium supply port.

6. The precooling system for precooling a fuel supply line of a hydrogen aircraft, according to claim 1 or 2, wherein
the cooling medium is hydrogen in a liquid, gaseous, or supercritical state.

7. A precooling method of precooling a fuel supply line of a hydrogen aircraft, the hydrogen aircraft including: an engine that uses hydrogen as a fuel; a fuel tank that stores the fuel; and the fuel supply line to supply the fuel from the fuel tank to the engine,
the precooling method comprising:
connecting a cooling medium supply line to a cooling medium supply port that is included in the fuel tank or in the fuel supply line;
connecting a cooling medium recovery line to a cooling medium recovery port that is included in the fuel supply line and that is located downstream of the cooling medium supply port in terms of a flow of the fuel; and
supplying a cooling medium from the cooling medium supply line to the fuel supply line through the cooling medium supply port and recovering the cooling medium that has been supplied to the fuel supply line by the cooling medium recovery line through the cooling medium recovery port to precool the fuel supply line.

8. The precooling method of precooling a fuel supply line of a hydrogen aircraft, according to claim 7, wherein
connecting the cooling medium supply line to the cooling medium supply port is performed after connecting the cooling medium recovery line to the cooling medium recovery port.

9. The precooling method of precooling a fuel supply line of a hydrogen aircraft, according to claim 7 or 8, wherein:
the fuel stored in the fuel tank is liquid hydrogen;
the cooling medium is gaseous hydrogen generated by vaporization of the liquid hydrogen;
the cooling medium supply port is included in the fuel supply line;
the fuel tank is connected to the cooling medium supply line; and
the precooling method further comprises supplying the gaseous hydrogen to the fuel supply line through the cooling medium supply port.

10. The precooling method of precooling a fuel supply line of a hydrogen aircraft, according to claim 7 or 8,
wherein the cooling medium is hydrogen in a liquid, gaseous, or supercritical state.

11. A hydrogen aircraft comprising:
an engine that uses hydrogen as a fuel;
a fuel tank that stores the fuel; and
a fuel supply line to supply the fuel from the fuel tank to the engine, wherein:
the fuel tank or the fuel supply line includes a cooling medium supply port to which a cooling medium is supplied;
the fuel supply line includes a cooling medium recovery port to recover the cooling medium, the cooling medium recovery port being located downstream of the cooling medium supply port in terms of a flow of the fuel; and
the fuel supply line is precooled by the cooling medium, which is supplied to the fuel supply line through the cooling medium supply port, flows through the fuel supply line, and is recovered from the fuel supply line through the cooling medium recovery port.

12. The hydrogen aircraft according to claim 11, wherein:
the fuel supply line includes an engine pump that boosts pressure of the fuel;
the cooling medium supply port is located upstream of the engine pump; and
the cooling medium recovery port is located downstream of the engine pump.

13. The hydrogen aircraft according to claim 11 or 12, wherein
the fuel supply line includes a heat exchanger that vaporizes the fuel; and
the cooling medium recovery port is located upstream of the heat exchanger on the fuel supply line.

14. Precooling equipment for precooling a fuel supply line of a hydrogen aircraft, the hydrogen aircraft including: an engine that uses hydrogen as a fuel; a fuel tank that stores the fuel; and the fuel supply line to supply the fuel from the fuel tank to the engine, the fuel tank or the fuel supply line including a cooling medium supply port, the fuel supply line including a cooling medium recovery port that is located downstream of the cooling medium supply port,
the precooling equipment comprising:
a cooling medium supply line connected to the cooling medium supply port; and
a cooling medium recovery line connected to the cooling medium recovery port, wherein
the precooling equipment supplies a cooling medium from the cooling medium supply line to the fuel supply line through the cooling medium supply port and recovers the cooling medium that has been supplied to the fuel supply line by the cooling medium recovery line through the cooling medium recovery port to precool the fuel supply line.

15. The precooling equipment according to claim 14, further comprising:
a cooling medium supply source that supplies the cooling medium to the cooling medium supply line; and
a cooling medium processor that cools, stores, or discards the cooling medium that has been recovered by the cooling medium recovery line.
